# EUROPÄISCHE PATENTSCHRIFT

(11) **EP 2 608 918 B1**
(45) Veröffentlichungstag und Bekanntmachung des Hinweises auf die Patenterteilung: **16.09.2015**
(21) Anmeldenummer: 11743496.9
(22) Anmeldetag: 28.07.2011
(51) Int. Cl.: B23D 61/12, B27B 19/00

(54) **SYSTEM MIT ZUMINDEST ZWEI OSZILLATIONSEINSATZWERKZEUGEN**
SYSTEM HAVING AT LEAST TWO OSCILLATION INSERT TOOLS
SYSTÈME COMPRENANT AU MOINS DEUX OUTILS À OSCILLATION

(30) Priorität: 26.08.2010 DE 102010039786
(43) Veröffentlichungstag der Anmeldung: 03.07.2013
(73) Patentinhaber: Robert Bosch GmbH, 70442 Stuttgart (DE)
(72) Erfinder: FUCHS, Rudolf, 73765 Neuhausen (DE)
(86) Internationale Anmeldenummer: PCT/EP2011/063041
(87) Internationale Veröffentlichungsnummer: WO 2012/025330

(56) Entgegenhaltungen:
- EP-A2- 1 882 538
- DE-A1-102006 022 804
- DE-A1-102006 051 153
- US-A- 5 306 285

## Beschreibung

### Stand der Technik

Die Erfindung betrifft ein System gemäß dem Oberbegriff des Patentanspruchs 1. Ein derartiges System geht beispielsweise aus der DE 10 2006 022 804 A1 herror.

Es ist bereits ein Oszillationseinsatzwerkzeug bekannt, welches mit einer Oszillationshandwerkzeugmaschine wirkungsmäßig koppelbar ist und zumindest ein von dem ersten Oszillationswerkzeug differierendes zweites Oszillationseinsatzwerkzeug, welches alternativ zu dem ersten Oszillationswerkzeug mit der Oszillationshandwerkzeugmaschine wirkungsmäßig koppelbar ist.

### Offenbarung der Erfindung

Die Erfindung sieht ein System gemäß dem Patentanspruch 1 vor, mit zumindest einem ersten Oszillationseinsatzwerkzeug, welches mit einer Oszillationshandwerkzeugmaschine wirkungsmäßig koppelbar ist, und mit zumindest einem von dem ersten Oszillationseinsatzwerkzeug differierenden, zweiten Oszillationseinsatzwerkzeug, welches alternativ zu dem ersten Oszillationseinsatzwerkzeug mit der Oszillationshandwerkzeugmaschine wirkungsmäßig koppelbar ist, wobei zumindest eines der zumindest zwei Oszillationseinsatzwerkzeuge wenigstens eine Ausgleichseinheit aufweist, die dazu vorgesehen ist, ein Massenträgheitsmoment des zumindest einen Oszillationseinsatzwerkzeugs an ein Massenträgheitsmoment des zumindest einen zweiten Oszillationeinsatzwerkzeug zumindest im Wesentlichen anzupassen, vorgeschlagen. Unter einer "Ausgleichseinheit" soll in diesem Zusammenhang insbesondere eine Einheit verstanden werden, welche gezielt, insbesondere von seiner Funktion zumindest im Wesentlichen überwiegend, vorzugsweise ausschließlich, dazu vorgesehen ist, ein Massenträgheitsmoment des zumindest einen Oszillationseinsatzwerkzeugs an ein Massenträgheitsmoment des zumindest zweiten Oszillationswerkzeugs zumindest im Wesentlichen anzupassen und welche sich insbesondere von rein bearbeitungs- und funktionsbedingten Strukturelementen des zumindest einen Oszillationseinsatzwerkzeugs, welche für eine Funktionstüchtigkeit des Oszillationseinsatzwerkzeugs in Verbindung mit der Oszillationshandwerkzeugmaschine notwendig sind, wie insbesondere Bearbeitungsmittel eines Bearbeitungsbereichs und/oder Aufnahmemittel, wie insbesondere eine Zentrierausnehmung und/oder zumindest eine Mitnahmeausnehmung, eines Aufnahmebereichs des Oszillationseinsatzwerkzeugs, unterscheidet. Unter einem "Bearbeitungsbereich" soll insbesondere ein Bereich des Grundkörpers des Oszillationseinsatzwerkzeugs verstanden werden, welcher vorzugsweise zumindest ein Bearbeitungsmittel, wie beispielsweise zumindest ein Sägezahn und/oder ein abrasives Schleifmittel, welches dazu vorgesehen ist, ein Werkstück zu bearbeiten, umfasst. Unter einem "Aufnahmebebreich" soll insbesondere ein Bereich des Grundkörpers des Oszillationseinsatzwerkzeugs verstanden werden, welcher dazu vorgesehen ist, wirkungsmäßig mit einer Werkzeugaufnahme der Oszillationshandwerkzeugmaschine gekoppelt zu werden. Vorzugsweise umfasst der Aufnahmebereich Aufnahmemittel, wie beispielsweise die Zentrierausnehmung und die zumindest eine Mitnahmeausnehmung, welche direkt mit der Werkzeugaufnahme der Oszillationshandwerkzeugmaschine koppelbar sind und/oder mit der Werkzeugaufnahme der Oszillationshandwerkzeugmaschine in Eingriff stehen. Unter "vorgesehen" soll insbesondere speziell ausgelegt und/oder ausgestattet verstanden werden. Unter "zumindest im Wesentlichen anpassen" soll in diesem Zusammenhang verstanden werden, dass eine Differenz zwischen dem Massenträgheitsmoment des ersten Oszillationseinsatzwerkzeugs und dem Massenträgheitsmoment des zumindest zweiten Oszillationseinsatzwerkzeugs um eine Oszillationsachse, welche im Betrieb mit einer Rotationssymmetrieachse einer Ausgangswelle übereinstimmt, in einem vorgesehenen Betriebszustand weniger als 20%, vorzugsweise weniger als 10% und besonders bevorzugt weniger als 5% des größten Massenträgheitsmoments der zumindest zwei Oszillationseinsatzwerkzeuge beträgt. In einer besonders bevorzugten Ausgestaltung des erfindungsgemäßen Systems sind die Massenträgheitsmomente des ersten und des zumindest zweiten Oszillationseinsatzwerkzeugs in einem Betriebszustand der Oszillationshandwerkzeugmaschine gleich groß.

Dadurch kann vorzugsweise erreicht werden, dass die zumindest zwei, voneinander differierenden Oszillationseinsatzwerkzeuge in einem Betriebszustand zumindest ein im Wesentlichen gleich großes Massenträgheitsmoment aufweisen. Eine Vibrationsausgleichseinheit der Oszillationshandwerkzeugmaschine, an welche die zumindest zwei Oszillationseinsatzwerkzeuge wirkungsmäßig koppelbar sind, kann dadurch vorteilhaft genau an die zumindest im Wesentlichen gleich großen Massenträgheitsmomente der zumindest zwei Oszillationseinsatzwerkzeuge angepasst werden, wodurch Vibrationen der Oszillationshandwerkzeugmaschine in einem Betriebszustand unabhängig davon, welches der zumindest zwei Oszillationseinsatzwerkzeuge wirkungsmäßig an die Oszillationshandwerkzeugmaschine gekoppelt ist, zumindest teilweise, vorzugsweise vollständig kompensiert werden können. Unter "Vibrationen" sollen in diesem Zusammenhang insbesondere unerwünschte Bewegungen der Oszillationshandwerkzeugmaschine verstanden werden, welche insbesondere durch Massenträgheitsmomente bedingt sind, welche von einer oszillierenden Bewegung des Oszillationseinsatzwerkzeug, welches wirkungsmäßig an die Oszillationshandwerkzeugmaschine gekoppelt ist, hervorgerufen werden. Zudem können Geräusche, welche durch die Vibrationen bedingt sind, auf vorteilhaft einfache Weise insbesondere teilweise und vorzugsweise vollständig reduziert werden. Dadurch kann ein Bedienkomfort für einen Benutzer vorteilhaft erhöht werden.

Zudem wird vorgeschlagen, dass zumindest ein drittes Oszillationseinsatzwerkzeug vorgesehen ist, welches die Ausgleichseinheit aufweist und alternativ zu dem ersten und zu dem zumindest zweiten Oszillationseinsatzwerkzeug mit der Oszillationshandwerkzeugmaschine wirkungsmäßig koppelbar ist. Weist das erfindungsgemäße System zumindest ein drittes Oszillationseinsatzwerkzeug auf, dessen Massenträgheitsmoment in einem Betriebszustand der Oszillationshandwerkzeugmaschine zumindest im Wesentlichen an die Massenträgheitsmomente des ersten und des zumindest zweiten Oszillationseinsatzwerkzeugs angepasst ist, kann eine Flexibilität des Systems und der Oszillationshandwerkzeugmaschine für den Benutzer vorteilhaft erhöht werden.

Ferner wird vorgeschlagen, dass die Ausgleichseinheit zumindest teilweise radial außerhalb eines Aufnahmebereichs eines Grundkörpers des zumindest einen Oszillationseinsatzwerkzeugs angeordnet ist. Unter "vorgesehen" soll in diesem Zusammenhang insbesondere speziell ausgestaltet, ausgelegt und/oder ausgestattet verstanden werden. Durch die Anordnung der Ausgleichseinheit des Oszillationseinsatzwerkzeugs kann die Ausgleichseinheit auf vorteilhaft einfache Weise und insbesondere platzsparend in den Grundkörper des Oszillationseinsatzwerkzeugs integriert werden.

Des Weiteren wird vorgeschlagen, dass die Ausgleichseinheit zumindest teilweise von zumindest einer Massenreduzierung gebildet ist, die zumindest teilweise zwischen einem Bearbeitungsbereich und einem Aufnahmebereich eines Grundkörpers angeordnet ist. Unter einer "Massenreduzierung" soll in diesem Zusammenhang ein Bereich des Oszillationseinsatzwerkzeugs verstanden werden, welcher eine zumindest teilweise Materialstärkenverringerung bezüglich einer Materialstärke des Grundkörpers des Oszillationseinsatzwerkzeugs, vorzugsweise ein vollständiger, senkrecht zu einer Haupterstreckung des Oszillationseinsatzwerkzeugs durchgehender Durchbruch durch die Materialstärke des Grundkörpers des Oszillationseinsatzwerkzeugs aufweist und/oder welcher eine niedrigere Dichte als ein Material, aus welchem der Grundkörper des Oszillationseinsatzwerkzeug gefertigt ist, aufweist.

Durch die Ausgestaltung kann auf vorteilhaft einfache Weise eine Anpassung des Massenträgheitsmoments des zumindest einen Oszillationseinsatzwerkzeugs an zumindest ein zweites, vorzugsweise auch an zumindest ein drittes Oszillationseinsatzwerkzeug, des erfindungsgemäßen Systems durch eine Reduzierung des Massenträgheitsmoments erreicht werden. Zudem kann die Ausgleicheinheit, welche von der zumindest einen Massenreduzierung gebildet ist, vorteilhaft Platz sparend in den Grundkörper des Oszillationseinsatzwerkzeugs integriert werden, sodass die Ausgleichseinheit einen Betriebszustand der Oszillationshandwerkzeugmaschine, an welche das erfindungsgemäße Oszillationseinsatzwerkzeug wirkungsmäßig gekoppelt ist, zumindest im Wesentlichen nicht behindert. In einer besonders bevorzugten Ausgestaltung der Ausgleichseinheit ist die Ausgleichseinheit zumindest teilweise insbesondere von zumindest 2, vorzugsweise von zumindest 4 und besonders bevorzugt von zumindest 6 Massenreduzierungen gebildet.

In einer weiteren Ausgestaltung der Erfindung wird vorgeschlagen, dass die Ausgleichseinheit zumindest teilweise von zumindest einer Zusatzmasse gebildet ist. Unter einer "Zusatzmasse" soll in diesem Zusammenhang insbesondere ein zusätzliches Element verstanden werden, welches vorzugsweise stoffschlüssig, wie insbesondere durch Schweißen, Kleben und/oder andere einem Fachmann als sinnvoll erscheinende Methoden, mit dem Grundkörper des Oszillationseinsatzwerkzeugs verbunden ist, wobei der Grundkörper gemeinsam mit dem Element in diesem Bereich eine insgesamt größere Materialstärke gegenüber einer Materialstärke des Grundkörpers des Oszillationseinsatzwerkzeugs in einem von diesem Bereich differierenden Bereich des Grundkörpers bildet. Unter einer "Zusatzmasse" soll in diesem Zusammenhang vorzugsweise ebenfalls eine Materialstärkenerhöhung der Materialstärke des Grundkörpers des Oszillationseinsatzwerkzeugs verstanden werden, welche von einer an den Grundkörper insbesondere einstückig angeformten, aus zumindest einer Haupterstreckungsebene, in welcher sich der Grundkörper in einem von der Ausgleichseinheit differierenden Bereich des Grundkörpers erstreckt, herausragenden Erhebung gebildet ist. Es ist ebenso denkbar, dass die Zusatzmasse alternativ oder zusätzlich von einem Element gebildet ist, welches eine höhere Dichte als ein Material, aus welchem der Grundkörper des Oszillationseinsatzwerkzeugs gefertigt ist, aufweist. Vorzugsweise differiert eine Kontur der Zusatzmasse zumindest teilweise, vorzugsweise vollständig von einer sich in der Haupterstreckungsebene des Oszillationseinsatzwerkzeugs erstreckenden, rein funktions- und/oder stabilitätsbedingten und/oder geometrisch sinnvollen Kontur des Grundkörpers des Oszillationseinsatzwerkzeugs.

Dadurch kann eine vorteilhaft einfache Anpassung des Massenträgheitsmoments des zumindest einen Oszillationseinsatzwerkzeugs an zumindest ein zweites, vorzugsweise auch an zumindest ein drittes Oszillationseinsatzwerkzeug des erfindungsgemäßen Systems durch eine Erhöhung des Massenträgheitsmoments erreicht werden. In einer besonders bevorzugten Ausgestaltung ist die Ausgleichseinheit zumindest teilweise insbesondere von zumindest 2, vorzugsweise von zumindest 4 und besonders bevorzugt von zumindest 6 Zusatzmassen gebildet.

Es wird vorgeschlagen, dass ein Aufnahmebereich zumindest teilweise zwischen einem Bearbeitungsbereich und der Zusatzmasse angeordnet ist. Durch die Anordnung der von der zumindest einen Zusatzmasse gebildeten Ausgleichseinheit kann die Ausgleicheinheit vorteilhaft platzsparend an dem Grundkörper des Oszillationseinsatzwerkzeugs angeordnet werden, sodass die von der zumindest eine Zusatzmasse gebildete Ausgleichseinheit einen Betriebszustand die Oszillationshandwerkzeugmaschine, an welche das Oszillationseinsatzwerkzeug wirkungsmäßig gekoppelt ist, zumindest im Wesentlichen nicht behindert.

In einer besonders bevorzugten Ausgestaltung der Erfindung ist die Ausgleichseinheit zumindest teilweise insbesondere von zumindest 2, vorzugsweise von zumindest 4 und besonders bevorzugt von zumindest 6 Massenreduzierungen und/oder Zusatzmassen gebildet, wobei die Massenreduzierungen und/oder die Zusatzmassen vorzugsweise gleichmäßig über einen Grundkörper, vorzugsweise zumindest teilweise zwischen dem Bearbeitungsbereich und dem Aufnahmebereich des Grundkörpers, verteilt angeordnet sind. Unter "gleichmäßig verteilt" soll in diesem Zusammenhang insbesondere verstanden werden, dass die zumindest 2, vorzugsweise zumindest 4 und besonders bevorzugt zumindest 6 Massenreduzierungen und/oder die Zusatzmassen vorzugsweise spiegelsymmetrisch zu zumindest einer Symmetrieachse des Grundkörpers des Oszillationseinsatzwerkzeugs auf dem Grundkörper angeordnet und/oder in den Grundkörper integriert sind. Dadurch kann auf vorteilhaft einfache Weise eine durch die Ausgleichseinheit bedingte Unwucht zumindest teilweise, vorzugsweise vollständig reduziert werden.

Des Weiteren geht die Erfindung aus von einer Oszillationshandwerkzeugmaschine gemäß dem Patentanspruch 7, mit einer Werkzeugaufnanme, welche dazu vorgesehen ist, ein Oszillationseinsatzwerkzeug eines Systems aufzunehmen.

Es wird vorgeschlagen, dass die Oszillationshandwerkzeugmaschine eine Vibrationsausgleichseinheit aufweist, welche dazu vorgesehen ist, ein Massenträgheitsmoment eines Oszillationseinsatzwerkzeugs eines Systems zumindest teilweise, vorzugsweise vollständig zu kompensieren. Vorzugsweise umfasst die Vibrationsausgleichseinheit wenigstens eine Ausgleichsmasse, die zum Ausgleich einer Vibration in wenigstens einem Betriebszustand entgegen einer Bewegungsrichtung der Werkzeugaufnahme angetrieben ist. Unter einer "Ausgleichsmasse" soll ein Bauteil verstanden werden, welches dazu vorgesehen ist, Vibrationen in einem Betriebszustand zumindest teilweise, vorzugsweise vollständig zu kompensieren. Unter "Vibrationen" sollen insbesondere unerwünschte Bewegungen der Oszillationshandwerkzeugmaschine verstanden werden, welche insbesondere durch Massenträgheitsmomente bedingt sind, welche von einer oszillierenden Bewegung des wirkungsmäßig mit der Oszillationshandwerkzeugmaschine gekoppelten Oszillationseinsatzwerkzeugs hervorgerufen werden.

Durch die Vibrationsausgleichseinheit können Vibrationen in einem Betriebszustand der Oszillationshandwerkzeugmaschine insbesondere reduziert, vorzugsweise auf Null reduziert werden. Dadurch kann ein Bedienkomfort der Oszillationshandwerkzeugmaschine für einen Benutzer vorteilhaft erhöht werden. Zudem können Geräusche, welche durch unerwünschte Vibrationen in einem Betriebszustand der Oszillationshandwerkzeugmaschine entstehen, vorteilhaft reduziert werden, wodurch der Bedienkomfort für den Benutzer besonders vorteilhaft erhöht werden kann. Zudem kann durch die Reduktion der Vibrationen, insbesondere die Reduktion der Vibrationen auf Null, in einem Betriebszustand der Oszillationshandwerkzeugmaschine ein vorteilhaft präzises Bearbeitungsergebnis erreicht werden.

### Zeichnung

Weitere Vorteile ergeben sich aus der folgenden Zeichnungsbeschreibung. In der Zeichnung ist ein Ausführungsbeispiel der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: eine erfindungsgemäße Oszillationshandwerkzeugmaschine mit einem wirkungsmäßig mit der Oszillationshandwerkzeugmaschine gekoppelten Oszillationseinsatzwerkzeug eines erfindungsgemäßen Systems in einer perspektivischen Seitenansicht,
- Fig. 2: einen Teilbereich der Oszillationshandwerkzeugmaschine mit einer Getriebeeinheit und einem Teil einer Antriebseinheit in einer schematischen Schnittdarstellung,
- Fig. 3: eine schematische Schnittdarstellung der Getriebeeinheit der erfindungsgemäßen Oszillationshandwerkzeugmaschine entlang der Linie III-II in Figur 2,
- Fig. 4: eine schematische Schnittdarstellung der Getriebeeinheit der erfindungsgemäßen Oszillationshandwerkzeugmaschine entlang der Linie IV-IV in Figur 2,
- Fig. 5: das Oszillationseinsatzwerkzeug des Systems in einem unmontierten Zustand in einer perspektivischen und schematischen Draufsicht,
- Fig. 6.: ein alternativ zu dem Oszillationseinsatzwerkzeug aus Figur 5 wirkungsmäßig mit der Oszillationshandwerkzeugmaschine koppelbaren Oszillationseinsatzwerkzeug des Systems in einem unmontierten Zustand in einer perspektivischen und schematischen Draufsicht,
- Fig. 7: ein alternativ zu den Oszillationseinsatzwerkzeugen aus den Figur 5 und 6 wirkungsmäßig mit der Oszillationshandwerkzeugmaschine koppelbaren Oszillationseinsatzwerkzeug des Systems in einem unmontierten Zustand in einer schematischen Draufsicht und
- Fig. 8: ein alternativ zu den Oszillationseinsatzwerkzeugen aus den Figur 5, 6 und 7 wirkungsmäßig mit der Oszillationshandwerkzeugmaschine koppelbaren Oszillationseinsatzwerkzeug des Systems in einem unmontierten Zustand in einer schematischen Draufsicht.

### Beschreibung des Ausführungsbeispiels

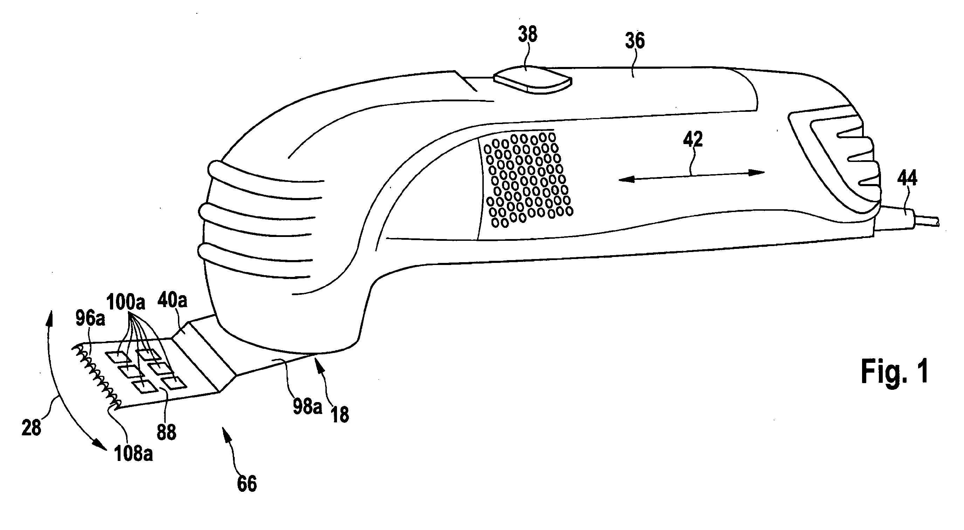

Die Figuren 1 bis 8 zeigen eine Bearbeitungseinheit, welche eine Oszillationshandwerkzeugmaschine und ein System, welches vier Oszillationseinsatzwerkzeuge 66, 68, 70, 72 aufweist, umfasst. Das System kann auch eine beliebige Kombination von zumindest zwei der vier Oszillationseinsatzwerkzeuge 66, 68, 70, 72 umfassen.

Figur 1 zeigt die Oszillationshandwerkzeugmaschine, die einen in einem als Handgriff dienenden Gehäuse 36 der Oszillationshandwerkzeugmaschine integrierten Schalter 38 zum Ein- bzw. Ausschalten der Oszillationshandwerkzeugmaschine aufweist. In einem vorderen Bereich der Oszillationshandwerkzeugmaschine ist eine Werkzeugaufnahme 18 mit dem darin gehaltenen Oszillationseinsatzwerkzeug 66 angeordnet. Zudem umfasst die Oszillationshandwerkzeugmaschine eine nicht näher dargestellte, von einem Elektromotor gebildete Antriebseinheit 10 und eine Getriebeeinheit 12. In einem der Werkzeugaufnahme 18 in einer Haupterstreckungsrichtung 42 der Oszillationshandwerkzeugmaschine abgewandten Bereich weist die Oszillationshandwerkzeugmaschine ein Stromkabel 44 zur Stromversorgung der Antriebseinheit 10 auf.

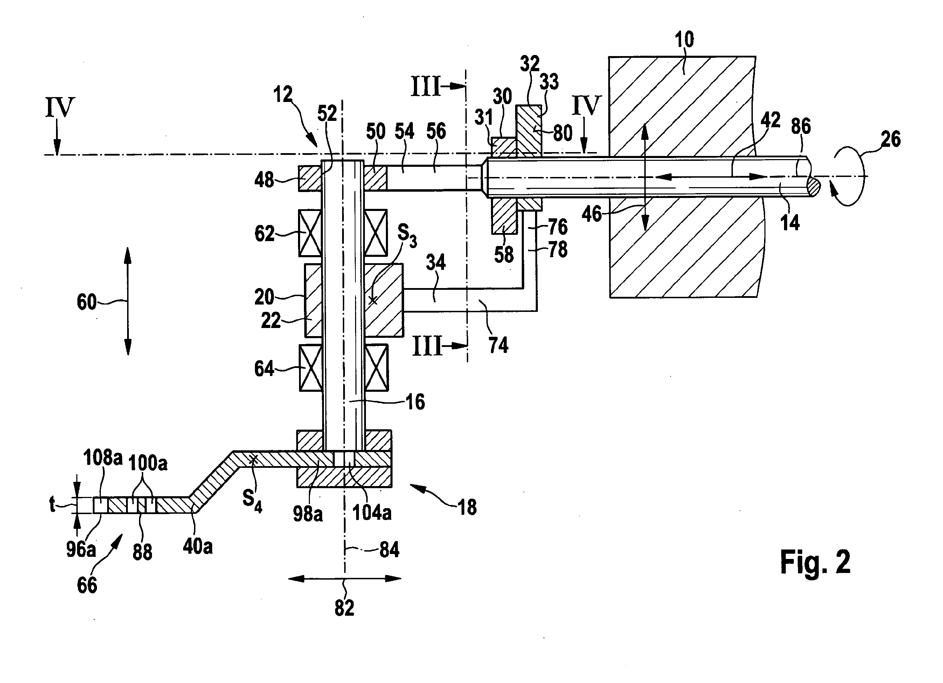

In Figur 2 ist die Getriebeeinheit 12 der Oszillationshandwerkzeugmaschine näher dargestellt. Die Getriebeeinheit 12 weist eine über die Antriebseinheit 10 rotierend antreibbare Eingangswelle 14 auf, welche wirkungsmäßig mit einem ersten und einem zweiten Kurvengetriebe 30, 32 verbunden ist. Das erste Kurvengetriebe 30 weist ein erstes Exzenterelement 31 auf, welches auf ein freies Ende der Eingangswelle 14 aufgepresst ist. Das zweite Kurvengetriebe 32 weist ein zweites Exzenterelement 33 auf, welches ebenfalls auf die Eingangswelle 14 aufgepresst ist. Die Exzenterelemente 31, 33 sind baugleich ausgestaltet und um 180° versetzt angeordnet, sodass ein Schwerpunkt S₁ des ersten Exzenterelements 31, welcher einem Mittelpunkt des ersten Exzenterelements 31 entspricht und ein Schwerpunkt S₂ des zweiten Exzenterelements 33, welcher einem Mittelpunkt des zweiten Exzenterelements 33 entspricht, in einer Radialrichtung 46 der Eingangswelle 14 nacheinander angeordnet sind. Das erste Exzenterelement 31 ist mit einer Ausgangswelle 16 der Getriebeeinheit 12 über einen eben ausgestalteten ersten Bewegungswandler 48 wirkungsmäßig verbunden. Unter "eben ausgestaltet" soll insbesondere verstanden werden, dass sich der erste Bewegungswandler 48 zumindest im Wesentlichen in einer Ebene erstreckt, die parallel zur Eingangswelle 14 der Antriebseinheit 10 und senkrecht zur Ausgangswelle 16 der Getriebeeinheit 12 angeordnet ist. Unter "zumindest im Wesentlichen" soll hierbei insbesondere verstanden werden, dass der erste Bewegungswandler 48 einen Winkel mit der Ebene einschließt, der insbesondere kleiner als 15°, besonders vorzugsweise kleiner als 5° ist. In diesem Ausführungsbeispiel list der erste Bewegungswandler 48 parallel zu der Ebene.

Der erste Bewegungswandler 48 weist einen ersten, in der Haupterstreckungsrichtung 42 der Oszillationshandwerkzeugmaschine dem Oszillationseinsatzwerkzeug 66 zugewandten Bereich 50 mit einer kreisförmigen Ausnehmung 52 auf, in die die Ausgangswelle 16 eingepresst ist. Des Weiteren weist der erste Bewegungswandler 48 einen zweiten Bereich 54 auf, welcher sich von einem, dem Oszillationseinsatzwerkzeug 66 abgewandten Ende des ersten Bereichs 50 in Haupterstreckungsrichtung 42 zur Antriebseinheit 10 erstreckt. Der zweite Bereich 54 des ersten Bewegungswandlers 48 weist zwei Arme 56 auf. Der Antriebseinheit 10 zugewandte Enden der Arme 56 des zweiten Bereichs 54 des ersten Bewegungswandlers 48 greifen an gegenüberliegenden Seiten des ersten Exzenterelements 31 einer Umfangsfläche 58 an.

Die Ausgangswelle 16 der Getriebeeinheit 12 erstreckt sich senkrecht zur Haupterstreckungsrichtung 42 der Oszillationshandwerkzeugmaschine vom ersten Bewegungswandler 48 betrachtet zur Werkzeugaufnahme 18 hin. Die Ausgangswelle 16 ist von zwei Lagern 62, 64 relativ zum Gehäuse 36 der Oszillationshandwerkzeugmaschine drehbar gelagert. Auf einem dem ersten Bewegungswandler 48 abgewandten Ende der Ausgangswelle 16 ist die Werkzeugaufnahme 18 angeordnet. Die Werkzeugaufnahme 18 ist hier nur schematisch dargestellt.

An das zweite Exzenterelement 33 greift ein zweiter, abgewinkelt ausgebildeter Bewegungswandler 34 an. Der zweite Bewegungswandler 34 ist um 90° abgewinkelt ausgestaltet und umfasst einen ersten Bereich 74 und einen zweiten Bereich 76. Der erste Bereich 74 des zweiten Bewegungswandlers 34 ist parallel zur Eingangswelle 14 angeordnet und ist mit einer Vibrationsausgleichseinheit 20 verbunden. Der zweite Bereich 76 des zweiten Bewegungswandlers 34 schließt an ein der Ausgangswelle 16 abgewandtes Ende des ersten Bereichs 74 an und erstreckt sich parallel zur Ausgangswelle 16 in einer Axialrichtung 60 der Ausgangswelle zur Eingangswelle 14 hin. Der zweite Bereich 76 des zweiten Bewegungswandlers 34 weist zwei Arme 78 auf, deren freie, der Eingangswelle 14 zugewandte Enden an gegenüberliegenden Seiten einer Umfangsfläche 80 des zweiten Exzenterelements 33 angreifen.

Die Vibrationsausgleichseinheit 20 ist von einer Ausgleichsmasse 22 gebildet, welche einstückig mit dem zweiten Bewegungswandler 34 ausgebildet ist und drehbar um die Ausgangswelle 16 herum angeordnet ist. Ein Schwerpunkt S₃ der Ausgleichsmasse 22 ist in einer Radialrichtung 82 der Ausgangswelle auf einer der Antriebseinheit 10 zugewandten Seite der Ausgangswelle 16 angeordnet. Ein Schwerpunkt S₄ des Einsatzwerkzeugs 66 ist in Radialrichtung 82 der Ausgangswelle 16 auf der, dem Schwerpunkt S₃ der Ausgleichsmasse 22 gegenüberliegenden Seite der Ausgangswelle 16 angeordnet.

In einem Betriebszustand der Oszillationshandwerkzeugmaschine treibt die Antriebseinheit 10 die Eingangswelle 14 und die auf der Eingangswelle 14 angeordneten Exzenterelemente 31, 33 rotierend an. Die exzentrische Bewegung des ersten Exzenterelements 31 wird von dem ersten Bewegungswandler 48 in einer Ebene aufgenommen, in welcher eine Rotationssymmetrieachse 86 der Eingangswelle 14 liegt und welche senkrecht zur Ausgangswelle 16 steht. Die exzentrische Bewegung des zweiten Exzenterelements 33 wird von dem zweiten Bewegungswandler 34 in einer Ebene aufgenommen, welche parallel zur Haupterstreckungsrichtung 42 der Oszillationshandwerkzeugmaschine verläuft und welche senkrecht zur Ausgangswelle 16 liegt. Dadurch entsteht eine oszillierende Bewegung 28 des ersten und des zweiten Bewegungswandlers 34, 48 um eine Achse, die einer Rotationssymmetrieachse 84 der Ausgangswelle 16 entspricht.

Die oszillierende Bewegung 28 des ersten Bewegungswandlers 48 wird über die Ausgangswelle 16 auf die Werkzeugaufnahme 18 und auf das darin gehaltene Oszillationseinsatzwerkzeug 66 übertragen. Die oszillierende Bewegung 28 des zweiten Bewegungswandlers 34 wird auf die einstückig mit dem zweiten Bewegungswandler 34 verbundene und drehbar auf der Ausgangswelle 16 der Getriebeeinheit 12 gelagerte Ausgleichsmasse 22 übertragen.

Durch die Phasenverschiebung der oszillierenden Bewegungen 28 des ersten und des zweiten Bewegungswandlers 34, 48, bzw. der Werkzeugaufnahme 18 und der Ausgleichsmasse 22, werden Vibrationen, welche in einem Betriebszustand der Oszillationshandwerkzeugmaschine durch, von einer oszillierenden Bewegung 28 des Einsatzwerkzeugs 66 hervorgerufenen Trägheitsmomente bedingt sind, von der Ausgleichsmasse ausgeglichen.

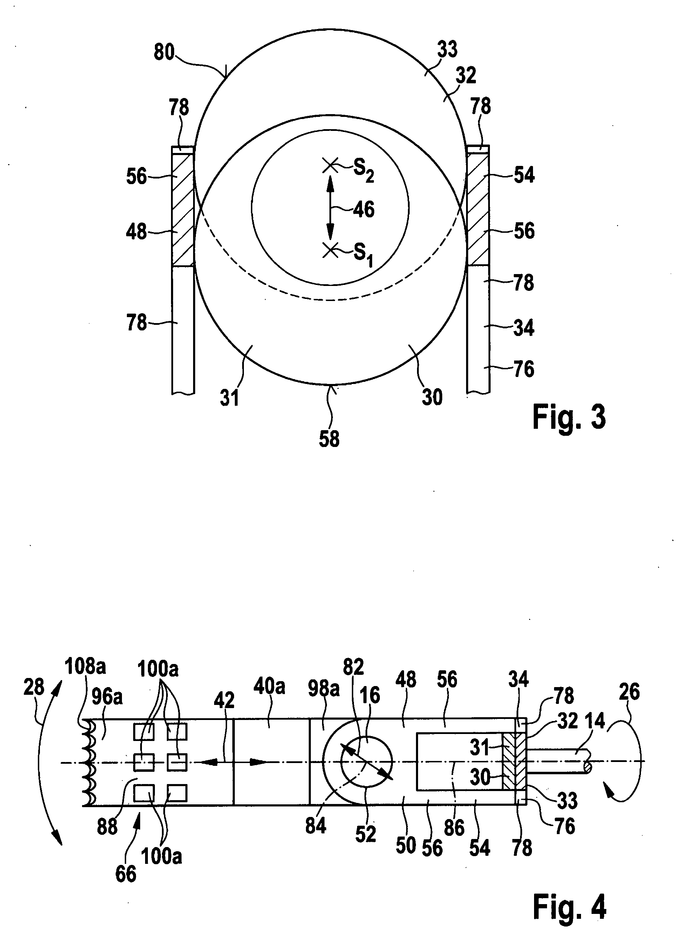

Figur 3 zeigt eine Schnittansicht entlang der Linie III-III. Die Schwerpunkte S₁ und S₂ der Exzenterelemente 31, 33 liegen in der dargestellten Position auf einer senkrecht zu Haupterstreckungsrichtung 42 und parallel zur Axialrichtung 60 stehenden Geraden. Die Arme 56 des ersten Bewegungswandlers 48 liegen an gegenüberliegenden Seiten einer Umfangsfläche 58 des ersten Exzenterelements 31 in Radialrichtung 46 der Eingangswelle 14 an. Die Arme 78 des zweiten Bewegungswandlers 34 liegen an der Umfangsfläche 80 des zweiten Exzenterelements 33 in Radialrichtung 46 der Eingangswelle 14 an. Die Arme 78 des zweiten Bewegungswandlers 34 verlaufen senkrecht zur Rotationssymmetrieachse 86 der Eingangswelle 14 hinter den Armen 56 des ersten Bewegungswandlers 48.

In Figur 4 ist ein Teil der Oszillationshandwerkzeugmaschine in einem Schnitt entlang der Linie IV-IV dargestellt. Der erste Bewegungswandler 48 umfasst den ersten Bereich 50 mit der Ausnehmung 52 und den zweiten Bereich 54 mit den beiden Armen 56. Die Enden der Arme 56 greifen an der Umfangsfläche 58 des ersten Exzenterelements 31, welches geschnitten dargestellt ist, an. Die Enden der Arme 78 des zweiten Bewegungswandlers 34 greifen an der Umfangsfläche 80 des zweiten, ebenfalls geschnitten dargestellten Exzenterelements 33 an.

Eine Drehbewegung 26 der Antriebseinheit 10 und der von der Antriebseinheit 10 angetriebenen Eingangswelle 14 wird in einem Betriebszustand der Oszillationshandwerkzeugmaschine auf das auf die Eingangswelle 14 aufgepresste erste und zweite Exzenterelement 31, 33 übertragen. Das erste und das zweite Exzenterelement 31, 33 beschreiben dabei eine von einem Kreis abweichende Umlaufbahn um eine Rotationssymmetrieachse 86 der Eingangswelle 14. Die Enden der Arme 56, 78 des ersten und des zweiten Bewegungswandlers 34, 48 nehmen jeweils eine Komponente der unrunden Bewegung des ersten und des zweiten Exzenterelements 31, 33 in einer Richtung auf, welche senkrecht zur Haupterstreckungsrichtung 42 der Oszillationshandwerkzeugmaschine und senkrecht zur Axialrichtung 60 der Ausgangswelle 16 steht, auf. Unter "unrund" soll in diesem Zusammenhang insbesondere zumindest im Wesentlichen von einem Kreis abweichend verstanden werden. Diese Komponente der unrunden Bewegung der Exzenterelemente 31, 33 bewirkt eine entgegen gesetzte oszillierende Bewegung 28 des ersten und des zweiten Bewegungswandlers 34, 48 um die Rotationssymmetrieachse 84 der Ausgangswelle 16.

Die oszillierende Bewegung 28 des ersten Bewegungswandlers 48 wird auf die in die Ausnehmung 52 eingepresste Ausgangswelle 16 und auf das an der Ausgangswelle über die Werkzeugaufnahme 18 befestigte Oszillationseinsatzwerkzeug 66 übertragen. Die oszillierende Bewegung 28 des zweiten Bewegungswandlers 34 wird auf die einstückig an den zweiten Bewegungswandler 34 angeformte Ausgleichsmasse 22 der Vibrationsausgleichseinheit 20 übertragen.

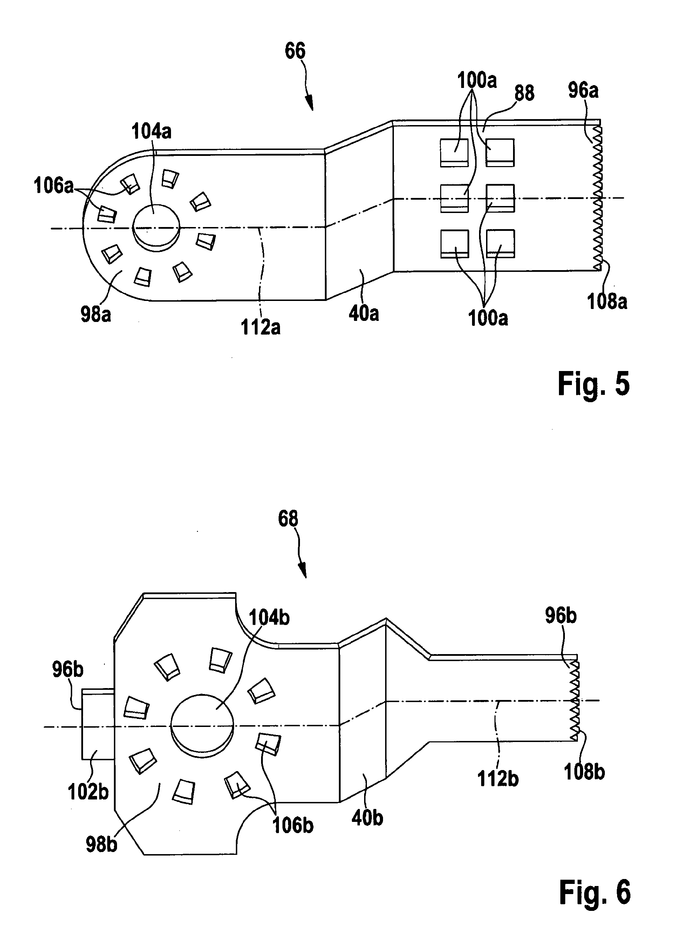

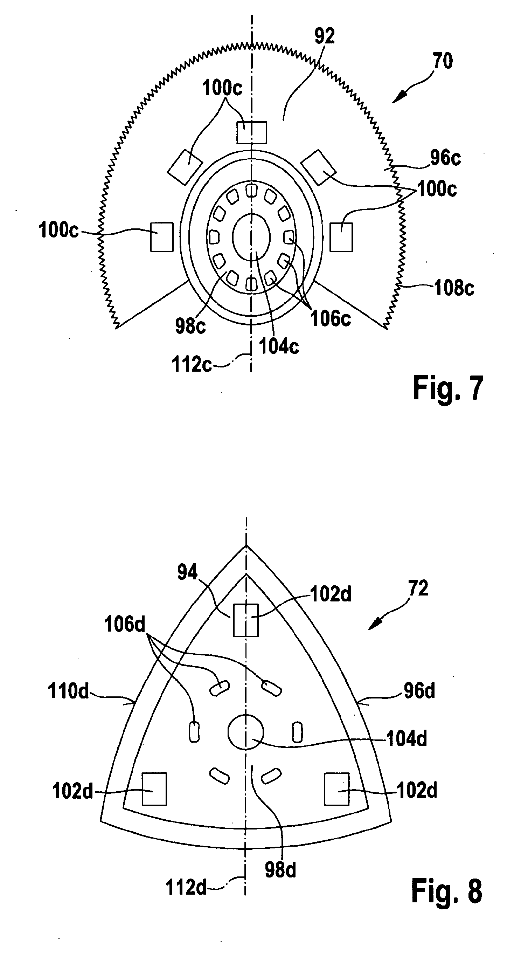

Die Figur 5, die Figur 6, die Figur 7, sowie die Figur 8 zeigen das erfindungsgemäße System mit vier, alternativ zueinander an der Oszillationshandwerkzeugmaschine koppelbaren Oszillationseinsatzwerkzeugen (66, 68, 70, 72). Sich im Wesentlichen entsprechende Bauteile und Merkmale sind grundsätzlich mit den gleichen Bezugszeichen beziffert, wobei zur Unterscheidung der vier alternativen Ausgestaltungen den Bezugszeichen die Buchstaben a (Figur 5), b (Figur 6), c (Figur 7) bzw. d (Figur 8) hinzugefügt sind. Es sind auch andere, einem Fachmann als sinnvoll erscheinende Oszillationseinsatzwerkzeuge denkbar, welche alternativ oder zusätzlich zu den in den Figuren 5 bis 8 gezeigten Oszillationseinsatzwerkzeugen zu dem erfindungsgemäßen System gehören können.

Figur 5 zeigt das erste Oszillationseinsatzwerkzeug 66, welches in den Figuren 1 bis 4 wirkungsmäßig an die Oszillationshandwerkzeugmaschine gekoppelt ist, in einem unmontierten Zustand. Das Oszillationseinsatzwerkzeug 66 gehört zu dem System mit vier Oszillationseinsatzwerkzeugen 66, 68, 70, 72. Das Oszillationseinsatzwerkzeug 66 weist einen Grundkörper 40a auf. Der Grundkörper 40a ist aus einem Blech ausgebildet. Der Grundkörper 40a umfasst einen Aufnahmebereich 98a und einen Bearbeitungsbereich 96a. Der Aufnahmebereich 98a weist eine Zentrierausnehmung 104a und mehrere, um einen der Zentrierausnehmung 104a gleichmäßig verteilte Mitnahmeausnehmungen 106a auf. Die Zentrierausnehmung 104a zentriert das Oszillationseinsatzwerkzeug 66 in einem montierten Zustand relativ zur Ausgangswelle 16 in der Werkzeugaufnahme 18. In die Mitnahmeausnehmungen 106a greifen in einem montierten Zustand des Oszillationseinsatzwerkzeugs 66 nicht näher dargestellte Mitnahmeelemente der Werkzeugaufnahme 18 ein. Mittels der Mitnahmeelemente, welche sich in einem montierten Zustand des Oszillationseinsatzwerkzeugs 66 durch die Mitnahmeausnehmungen 106a erstrecken, wird die oszillierende Bewegung 28 der Ausgangswelle 16 über die Werkzeugaufnahme 18 auf das Oszillationseinsatzwerkzeug 66 formschlüssig übertragen. Der Bearbeitungsbereich 96a des Grundköpers 40a des Oszillationseinsatzwerkzeugs 66 weist von Sägezähnen gebildete Bearbeitungsmittel 108a auf. Die von Sägezähnen gebildeten Bearbeitungsmittel 108a des Bearbeitungsbereichs 96a bilden eine gerade, linienförmig ausgebildete Sägezahngeometrie.

Der Grundkörper 40a des ersten, von einem Oszillationssägeblatt gebildeten Oszillationseinsatzwerkzeugs 66 ist achsensymmetrisch zu einer Symmetrieachse 112a ausgebildet, welche in einem montierten Zustand des Oszillationseinsatzwerkzeugs 66 parallel zur Haupterstreckungsrichtung 42 der Oszillationshandwerkzeugmaschine verläuft. Der Grundkörper 40a des Oszillationseinsatzwerkzeugs 66 erstreckt sich in drei Ebenen. Eine erste Ebene, in welcher sich der Grundkörper 40a des Oszillationseinsatzwerkzeugs 66 erstreckt, verläuft in einem montierten Zustand des Oszillationseinsatzwerkzeugs 66 senkrecht zur Rotationssymmetrieachse 84 der Ausgangswelle 16 der Oszillationshandwerkzeugmaschine. In der ersten Ebene weist der Grundkörper 40a des Oszillationseinsatzwerkzeugs 66 in einem vorderen Bereich einen rechteckigen Grundriss auf. In einem dem rechteckigen Grundriss abgewandten Bereich des Oszillationseinsatzwerkzeugs 66 in der ersten Ebene ist der Aufnahmebereich 98a angeordnet. In diesem Bereich weist der Grundkörper 40a des Oszillationseinsatzwerkzeugs 66 einen halbkreisförmigen Grundriss auf, welcher an den rechteckigen Grundriss in dem vorderen Bereich anschließt. Eine zweite Ebene, in welcher sich ein Teil des Grundkörpers 40a erstreckt, verläuft parallel zur ersten Ebene. Die zweite Ebene ist in Axialrichtung 60 der Ausgangswelle 16 beabstandet von der Ebene angeordnet. Die zweite Ebene liegt in Axialrichtung 60 der Ausgangswelle 16 in einem montierten Zustand des Oszillationseinsatzwerkzeugs 66 zwischen der ersten Ebene und der Oszillationshandwerkzeugmaschine. In der zweiten Ebene ist der Aufnahmebereich 98a des Grundkörpers 40a des Oszillationseinsatzwerkzeugs 66 angeordnet. Ein weiterer Teil des Grundkörpers 40a des Oszillationseinsatzwerkzeugs 66 verbindet den Teil des Grundkörpers 40a, welcher in der ersten Ebene verläuft, und der Teil des Grundkörpers 40a, welcher in der zweiten Ebene verläuft. Der weitere Teil des Grundkörpers 40a verläuft in einer schräg zu der ersten und zu der zweiten Ebene verlaufenden dritten Ebene.

Zwischen dem Aufnahmebereich 98a und dem Bearbeitungsbereich 96a weist der Grundkörper 40a eine Ausgleichseinheit 88 auf. Die Ausgleichseinheit 88 ist in der ersten Ebene des Grundkörpers 40a angeordnet. Die Ausgleichseinheit 88 ist radial außerhalb des Aufnahmebereichs 98a des Grundkörpers 40a des ersten Oszillationseinsatzwerkzeug 66 angeordnet. Die Ausgleichseinheit 88 umfasst 6 Massenreduzierungen 100a. Die 6 Massenreduzierungen 100a sind in zwei, in einem montierten Zustand des Oszillationseinsatzwerkzeugs 66 senkrecht zur Haupterstreckungsrichtung 42 der Oszillationshandwerkzeugmaschine stehenden Reihen angeordnet. Die Massenreduzierungen 100a sind von Durchbrüchen durch eine Materialstärke t des Grundkörpers 40a des Oszillationseinsatzwerkzeugs 66 gebildet. Die von Durchbrüchen gebildeten Massenreduzierungen 100a der Ausgleichseinheit 88 des ersten Oszillationseinsatzwerkzeugs 66 sind achsensymmetrisch zur Symmetrieachse 112a des Grundkörpers 40a des ersten Oszillationseinsatzwerkzeugs 66 angeordnet. Die Massenreduzierungen 100a der Ausgleichseinheit 88 des ersten Oszillationseinsatzwerkzeugs 66 sind zwischen dem Bearbeitungsbereich 96a und dem Aufnahmebereich 98a des Grundkörpers 40a des ersten Oszillationseinsatzwerkzeugs 66 angeordnet.

In Figur 6 ist ein zweites Oszillationseinsatzwerkzeug 68 in einem unmontierten Zustand gezeigt, welches alternativ zu dem ersten Oszillationseinsatzwerkzeug 66 wirkungsmäßig mit der Oszillationshandwerkzeugmaschine gekoppelt werden kann. Das zweite Oszillationseinsatzwerkzeug 68 gehört zu dem System mit vier Oszillationseinsatzwerkzeugen 66, 68, 70, 72. Das zweite Oszillationseinsatzwerkzeug ist von einem Oszillationssägeblatt gebildet. Das zweite Oszillationseinsatzwerkzeug 68 weist einen Grundkörper 40b auf. Der Grundkörper 40b ist aus einem Blech ausgebildet. Der Grundkörper 40b des zweiten, von einem Oszillationssägeblatt gebildeten Oszillationseinsatzwerkzeugs 68 ist achsensymmetrisch zu einer Symmetrieachse 112b ausgebildet, welche in einem montierten Zustand des Oszillationseinsatzwerkzeugs 68 parallel zur Haupterstreckungsrichtung 42 der Oszillationshandwerkzeugmaschine verläuft. Der Grundkörper 40b umfasst einen Aufnahmebereich 98b und einen Bearbeitungsbereich 96b. Der Aufnahmebereich 98b weist eine Zentrierausnehmung 104b und mehrere, um einen Umfang der Zentrierausnehmung 104b gleichmäßig verteilte Mitnahmeausnehmungen 106b auf. Die Zentrierausnehmung 104b ist dazu vorgesehen, das zweite Oszillationseinsatzwerkzeug 68 in einem montierten Zustand relativ zur Ausgangswelle 16 in der Werkzeugaufnahme 18 zu zentrieren. In die Mitnahmeausnehmungen 106b greifen in einem montierten Zustand des zweiten Oszillationseinsatzwerkzeugs 68 nicht näher dargestellte Mitnahmeelemente der Werkzeugaufnahme 18 ein. Mittels der Mitnahmeelemente, welche sich in einem montierten Zustand des zweiten Oszillationseinsatzwerkzeugs 68 durch die Mitnahmeausnehmungen 106b erstrecken, wird eine oszillierende Bewegung 28 der Ausgangswelle 16 über die Werkzeugaufnahme 18 auf das zweite Oszillationseinsatzwerkzeug 68 formschlüssig übertragen. Der Bearbeitungsbereich 96b des Grundköpers 40b des zweiten Oszillationseinsatzwerkzeugs 68 weist von Sägezähnen gebildete Bearbeitungsmittel 108b auf. Die von Sägezähnen gebildeten Bearbeitungsmittel 108b des Bearbeitungsbereichs 96b des zweiten Oszillationseinsatzwerkzeugs 68 bilden eine gerade, linienförmige Sägezahngeometrie. Der Bearbeitungsbereich 96b des zweiten Oszillationseinsatzwerkzeugs 68 ist, senkrecht zur Symmetrieachse 112b des zweiten Oszillationseinsatzwerkzeugs 68 betrachtet, schmaler ausgebildet als der Bearbeitungsbereich 96a des ersten Oszillationseinsatzwerkzeugs 66 ebenfalls senkrecht zur Symmetrieachse 112a des ersten Oszillationseinsatzwerkzeugs 66 betrachtet.

Der Grundkörper 40b des zweiten Oszillationseinsatzwerkzeugs 68 erstreckt sich in drei Ebenen. Eine erste Ebene, in welcher sich ein erster Teil des Grundkörpers 40b des zweiten Oszillationseinsatzwerkzeugs 68 erstreckt, verläuft in einem montierten Zustand des zweiten Oszillationseinsatzwerkzeugs 68 senkrecht zur Rotationssymmetrieachse 84 der Ausgangswelle 16 der Oszillationshandwerkzeugmaschine. In der ersten Ebene weist der Grundkörper 40b des zweiten Oszillationseinsatzwerkzeugs 68 in einem vorderen Bereich einen rechteckigen Grundriss auf. In einem dem rechteckigen Grundriss abgewandten Bereich des zweiten Oszillationseinsatzwerkzeugs 68 in der ersten Ebene ist der Aufnahmebereich 98b angeordnet. In diesem Bereich weist der Grundkörper 40b des zweiten Oszillationseinsatzwerkzeugs 68 ebenfalls einen rechteckigen Grundriss auf, welcher an einer dem einem Bearbeitungsbereich 96b des Grundkörpers 40b des zweiten Oszillationseinsatzwerkzeugs 68 abgewandten Seite des rechteckigen Grundrisses abgeflachte Ecken aufweist. Die rechteckigen Grundrisse der beiden Bereiche des ersten Teils des Grundkörpers 40b sind über eine kreisbogenförmige, konkave Kontur miteinander verbunden. Eine zweite Ebene, in welcher sich ein Teil des Grundkörpers 40b erstreckt, verläuft parallel zur ersten Ebene. Die zweite Ebene ist in Axialrichtung 60 der Ausgangswelle 16 beabstandet von der ersten Ebene angeordnet. Die erste Ebene liegt in Axialrichtung 60 der Ausgangswelle 16 in einem montierten Zustand des zweiten Oszillationseinsatzwerkzeugs 68 zwischen der zweiten Ebene und der Oszillationshandwerkzeugmaschine. In der zweiten Ebene ist der Aufnahmebereich 98b des Grundkörpers 40b des zweiten Oszillationseinsatzwerkzeugs 68 angeordnet. Ein weiterer Teil des Grundkörpers 40b des Oszillationseinsatzwerkzeugs 68 verbindet den Teil des Grundkörpers 40b, welcher in der ersten Ebene verläuft, und den Teil des Grundkörpers 40b, welcher in der zweiten Ebene verläuft. Der weitere Teil des Grundkörpers 40b verläuft in einer schräg zu der ersten und zu der zweiten Ebene verlaufenden dritten Ebene.

An einer dem Bearbeitungsbereich 96b des zweiten Oszillationseinsatzwerkzeugs 68 abgewandten Seite des Aufnahmebereichs 98b ist an den Grundkörper 40b eine Ausgleichseinheit 90 angeformt. Die Ausgleichseinheit 90 ist radial außerhalb des Aufnahmebereichs 98b des Grundkörpers 40b des zweiten Oszillationseinsatzwerkzeug 68 angeordnet. Die Ausgleichseinheit 90 umfasst eine Zusatzmasse 102b. Die Zusatzmasse 102b ist stoffschlüssig an einer Kante des Grundkörpers 40b des zweiten Oszillationseinsatzwerkzeugs 68 befestigt und mit dem Grundkörper 40b verbunden. Die Zusatzmasse 102b ist einstückig mit dem Grundkörper 40b des Oszillationseinsatzwerkzeugs 68 ausgebildet. Die Zusatzmasse 102b der Ausgleichseinheit 90 des zweiten Oszillationseinsatzwerkzeugs 68 erstreckt sich in einer Richtung, welche parallel zur Symmetrieachse 112b des zweiten Oszillationseinsatzwerkzeugs 68 verläuft, von einer Kante des Grundkörpers 40b des zweiten Oszillationseinsatzwerkzeugs 68, welche, in der parallel zur Symmetrieachse 112b verlaufenden Richtung betrachtet, dem Bearbeitungsbereich 96b abgewandt angeordnet ist, parallel zur Symmetrieachse 112b von dem Grundkörper 40b des zweiten Oszillationseinsatzwerkzeugs 68 weg. Der Aufnahmebereich 98b des Grundkörpers 40b ist zwischen dem Bearbeitungsbereich 96b des Grundkörpers 40b und der Zusatzmasse der Ausgleichseinheit 90 angeordnet.

Durch die Ausgestaltung, Bemaßung und Positionierung der Zusatzmasse 102b der Ausgleichseinheit 98b weist das zweite Oszillationseinsatzwerkzeug 68 in einem montierten Zustand des zweiten Oszillationseinsatzwerkzeugs 68 an der Oszillationshandwerkzeugmaschine in einem Betriebszustand der Oszillationshandwerkzeugmaschine das selbe Massenträgheitsmoment auf, wie das erste Oszillationseinsatzwerkzeug 66 des Systems.

In Figur 7 ist das dritte, als Sägeblatt ausgebildete Oszillationseinsatzwerkzeug 70 in einem unmontierten Zustand gezeigt, welches alternativ zu dem ersten oder dem zweiten Oszillationseinsatzwerkzeug 66, 68 wirkungsmäßig mit der Oszillationshandwerkzeugmaschine gekoppelt werden kann. Das dritte Oszillationseinsatzwerkzeug 70 gehört zu dem System mit den vier Oszillationseinsatzwerkzeugen 66, 68, 70, 72. Das dritte Oszillationseinsatzwerkzeug 70 weist einen Grundkörper 40c auf. Der Grundkörper 40c ist aus einem Blech ausgebildet. Der Grundkörper 40c umfasst einen Aufnahmebereich 98c und einen Bearbeitungsbereich 96c. Der Aufnahmebereich 98c weist eine Zentrierausnehmung 104c und mehrere, um einen Umfang der Zentrierausnehmung 104c gleichmäßig verteilte Mitnahmeausnehmungen 106c auf. Die Zentrierausnehmung 104c ist dazu vorgesehen, das dritte Oszillationseinsatzwerkzeug 70 in einem montierten Zustand relativ zur Ausgangswelle 16 in der Werkzeugaufnahme 18 zu zentrieren. In die Mitnahmeausnehmungen 106c greifen in einem montierten Zustand des dritten Oszillationseinsatzwerkzeugs 70 nicht näher dargestellte Mitnahmeelemente der Werkzeugaufnahme 18 ein. Mittels der Mitnahmeelemente, welche sich in einem montierten Zustand des dritten Oszillationseinsatzwerkzeugs 70 durch die Mitnahmeausnehmungen 106c erstrecken, wird die oszillierende Bewegung 28 der Ausgangswelle 16 über die Werkzeugaufnahme 18 auf das dritte Oszillationseinsatzwerkzeug 70 formschlüssig übertragen.

Der Bearbeitungsbereich 96c des Grundköpers 40c des dritten Oszillationseinsatzwerkzeugs 70c weist von Sägezähnen gebildete Bearbeitungsmittel 108c auf. Der Bearbeitungsbereich 96c erstreckt sich über einen Teil eines Außenbereichs des Grundkörpers 40c. Die von Sägezähnen gebildeten Bearbeitungsmittel 108c des Bearbeitungsbereichs 96c bilden eine gebogene, kreisbogenförmige Sägezahngeometrie. Der Grundkörper 40c weist einen ersten, kreissegmentförmigen Bereich auf. Der erste, kreissegmentförmige Bereich des Grundkörpers 40c umfasst den Bearbeitungsbereich 96c und die Ausgleichseinheit 92. Zudem weist der Grundkörper 40c einen zweiten, kreisförmigen Bereich auf, welcher den Aufnahmebereich 98c umfasst. Der Aufnahmebereich 98c ist radial innerhalb des zweiten, kreisförmigen Bereichs des Grundkörpers 40c angeordnet und verläuft in einer Ebene, welche parallel und beabstandet von einer Ebene des ersten, kreissegmentförmigen Bereichs des Grundkörpers 40c angeordnet ist. Der Grundkörper 40c des dritten Oszillationseinsatzwerkzeugs 70 ist achsensymmetrisch zu einer Symmetrieachse 112c, welche in einem montierten Zustand des dritten Oszillationseinsatzwerkzeugs 70 parallel zur Haupterstreckungsrichtung 42 der Oszillationshandwerkzeugmaschine verläuft. Die Ausgleichseinheit 92 ist radial außerhalb des Aufnahmebereichs 98c des Grundkörpers 40c des dritten ersten Oszillationseinsatzwerkzeug 70 angeordnet. Die Ausgleichseinheit 92 des dritten Oszillationseinsatzwerkzeugs 70 umfasst fünf Massenreduzierungen 100c. Die fünf Massenreduzierungen 100c sind über den ersten, kreissegmentförmigen Bereich des Grundkörpers 40c verteilt angeordnet. Die Massenreduzierungen 100c der Ausgleichseinheit 92 sind achsensymmetrisch zur Symmetrieachse 112c des Grundkörpers 40c des dritten Oszillationseinsatzwerkzeugs 70 angeordnet. Die Massenreduzierungen 100c sind von Durchbrüchen durch eine Materialstärke t des Grundkörpers 40c des Oszillationseinsatzwerkzeugs 70 gebildet. Die Massenreduzierungen 100c der Ausgleichseinheit 92 des dritten Oszillationseinsatzwerkzeugs 70 sind zwischen dem Bearbeitungsbereich 96c und dem Aufnahmebereich 98c des Grundkörpers 40c des ersten Oszillationseinsatzwerkzeugs 70 angeordnet.

In Figur 8 ist ein viertes Oszillationseinsatzwerkzeug 72 in einem unmontierten Zustand gezeigt, welches alternativ zu dem ersten, dem zweiten oder dem dritten Oszillationseinsatzwerkzeug 66, 68, 70 wirkungsmäßig mit der Oszillationshandwerkzeugmaschine gekoppelt werden kann. Das vierte Oszillationseinsatzwerkzeug 72 gehört zu dem System von zumindest zwei Oszillationseinsatzwerkzeugen 66, 68, 70, 72. Das vierte Oszillationseinsatzwerkzeug 72 ist von einem Schleifteller gebildet. Das vierte Oszillationseinsatzwerkzeug 72 weist einen Grundkörper 40d auf. Der Grundkörper 40d umfasst einen Aufnahmebereich 98d und einen Bearbeitungsbereich 96d.

Eine Form des Grundkörpers 40d des vierten Oszillationseinsatzwerkzeugs 72 entspricht einer Projektion eines sphärischen Dreiecks auf eine Ebene. Der Grundkörper 40d des vierten Oszillationseinsatzwerkzeugs 72 ist achsensymmetrisch zu insgesamt drei Symmetrieachsen 112d ausgebildet. Die Symmetrieachsen 112d verlaufen durch einen Mittelpunkt der Zentrierausnehmung 104d und durch jeweils eine Ecke des Grundkörpers 40d. Der Grundkörper 40d umfasst eine Trägerplatte, welche den Aufnahmebereich 98d und eine Ausgleichseinheit 94 umfasst. Der Aufnahmebereich 98d ist auf einer ersten Seite, welche sich in einer Haupterstreckungsebene des vierten Oszillationseinsatzwerkzeugs 72 erstreckt, angeordnet. Der Aufnahmebereich 98d ist mittig auf dem Grundkörper 40d angeordnet.

Der Aufnahmebereich 98d weist eine Zentrierausnehmung 104d und mehrere, um einem Umfang der Zentrierausnehmung 104d gleichmäßig verteilte Mitnahmeausnehmungen 106d auf. Die Zentrierausnehmung 104d ist dazu vorgesehen, das vierte Oszillationseinsatzwerkzeug 72 in einem montierten Zustand relativ zur Ausgangswelle 16 in der Werkzeugaufnahme 18 zu zentrieren. In die Mitnahmeausnehmungen 106d greifen in einem montierten Zustand des vierten Oszillationseinsatzwerkzeug 72 nicht näher dargestellte Mitnahmeelemente der Werkzeugaufnahme 18 ein. Mittels der Mitnahmeelemente, welche sich in einem montierten Zustand des vierten Oszillationseinsatzwerkzeugs 72 durch die Mitnahmeausnehmungen 106d erstrecken, wird eine oszillierende Bewegung 28 der Ausgangswelle 16 über die Werkzeugaufnahme 18 auf das vierte Oszillationseinsatzwerkzeug 72 formschlüssig übertragen.

Der Bearbeitungsbereich 96d des Grundköpers 40d des vierten Oszillationseinsatzwerkzeugs 72 weist von abrasiven Schleifmitteln gebildete Bearbeitungsmittel 108d auf. Die von abrasiven Schleifmitteln gebildeten Bearbeitungsmittel 108d bilden einen Schleifbelag. Der Bearbeitungsbereich 96d des vierten Oszillationseinsatzwerkzeugs 72 ist auf einer der ersten Seite, welche sich in einer Haupterstreckungsebene des vierten Oszillationseinsatzwerkzeugs 72 erstreckt, abgewandten Unterseite 110d des Grundkörpers 40d angeordnet.

Die Ausgleichseinheit 94 ist radial außerhalb des Aufnahmebereichs 98d des Grundkörpers 40d des vierten Oszillationseinsatzwerkzeug 72 angeordnet. Die Ausgleichseinheit 94 des vierten Oszillationseinsatzwerkzeugs 72 umfasst drei Zusatzmassen 102d. Die drei Zusatzmassen 102d sind radial außerhalb des Aufnahmebereichs 98d auf dem Grundkörper 40d des vierten Oszillationseinsatzwerkzeugs 72 angeordnet. Die Zusatzmassen 102d der Ausgleichseinheit 94 des vierten Oszillationseinsatzwerkzeugs 72 sind zwischen dem Bearbeitungsbereich 96d und dem Aufnahmebereich 98d des Grundkörpers 40d des ersten Oszillationseinsatzwerkzeugs 72 angeordnet. Die drei Zusatzmassen 102d der Ausgleichseinheit 94 sind gleichmäßig über den Grundkörper 40d des vierten Oszillationseinsatzwerkzeugs 72 verteilt angeordnet. Jeweils eine Zusatzmasse 102d der Ausgleichseinheit 94 ist in jeweils einer Ecke des Grundkörpers 40d angeordnet. Die Zusatzmassen 102d der Ausgleichseinheit 94 des vierten Oszillationseinsatzwerkzeugs 72 sind achsensymmetrisch zu den Symmetrieachsen 112d des Grundkörpers 40d des vierten Oszillationseinsatzwerkzeugs 72 angeordnet.

Die Ausgleichseinheiten 88, 90, 92, 94 der vier Oszillationseinsatzwerkzeuge 66, 68, 70, 72 des Systems sind dazu vorgesehen, die Massenträgheitsmomente der vier Oszillationseinsatzwerkzeuge 66, 68, 70, 72 des Systems um die Rotationssymmetrieachse 84 der Ausgangswelle 16 der Oszillationshandwerkzeugmaschine aneinander anzupassen. Die Vibrationsausgleichseinheit 20 der Oszillationshandwerkzeugmaschine ist an das Massenträgheitsmoment der vier Oszillationseinsatzwerkzeuge 66, 68, 70, 72 des Systems angepasst, sodass Vibrationen, welche durch Massenträgheitsmomente in einem Betriebszustand der Oszillationshandwerkzeugmaschine entstehen, kompensiert werden können.

## Patentansprüche

1. System mit zumindest einem ersten Oszillationseinsatzwerkzeug (66), welches mit einer Oszillationshandwerkzeugmaschine wirkungsmäßig koppelbar ist, und mit zumindest einem von dem ersten Oszillationseinsatzwerkzeug (66) differierenden, zweiten Oszillationseinsatzwerkzeug (68, 70, 72), welches alternativ zu dem ersten Oszillationseinsatzwerkzeug (66) mit der Oszillationshandwerkzeugmaschine wirkungsmäßig koppelbar ist, **dadurch gekennzeichnet, dass** zumindest eines der zumindest zwei Oszillationseinsatzwerkzeuge (66, 68, 70, 72) wenigstens eine Ausgleichseinheit (88, 90, 92, 94) aufweist, die dazu vorgesehen ist, ein Massenträgheitsmoment des ersten Oszillationseinsatzwerkzeugs (66) an ein Massenträgheitsmoment des zumindest einen zweiten Oszillationseinsatzwerkzeugs (68, 70, 72) um eine Oszillationsachse zumindest derart anzupassen, dass eine Differenz zwischen dem Massenträgheitsmoment des ersten Oszillationseinsatzwerkzeugs (66) und dem Massenträgheitsmoment des zumindest einen zweiten Oszillationseinsatzwerkzeugs (68, 70, 72) um die Oszillationsachse in einem vorgesehenen Betriebszustand weniger als 20% des größten Massenträgheitsmoments der zumindest zwei Oszillationseinsatzwerkzeuge (66, 68, 70, 72) beträgt.

2. System nach Anspruch 1,
**dadurch gekennzeichnet,**
**dass** zumindest ein drittes Oszillationseinsatzwerkzeug (70, 72) vorgesehen ist, welches die Ausgleichseinheit (88, 90, 92, 94) aufweist und alternativ zu dem ersten und zu dem zumindest einen zweiten Oszillationseinsatzwerkzeug (66, 68, 70, 72) mit der Oszillationshandwerkzeugmaschine wirkungsmäßig koppelbar ist.

3. System nach einem der vorhergehenden Ansprüche,
**dadurch gekennzeichnet,**
**dass** die Ausgleichseinheit (88, 90, 92, 94) zumindest teilweise radial außerhalb eines Aufnahmebereichs (98a, 98b, 98c, 98d) eines Grundkörpers (40a, 40b, 40c, 40d) des zumindest einen Oszillationseinsatzwerkzeugs (66, 68, 70, 72) angeordnet ist.

4. System nach einem der vorhergehenden Ansprüche,
**dadurch gekennzeichnet,**
**dass** die Ausgleichseinheit (88, 92) zumindest teilweise von zumindest einer Massenreduzierung (100a, 100c) gebildet ist, die zumindest teilweise zwischen einem Bearbeitungsbereich (96a, 96c) und einem Aufnahmebereich (98a, 98c) eines Grundkörpers (40a, 40c) angeordnet ist.

5. System nach einem der vorhergehenden Ansprüche,
**dadurch gekennzeichnet,**
**dass** die Ausgleichseinheit (90, 94) zumindest teilweise von zumindest einer Zusatzmasse (102b, 102d) gebildet ist.

6. System nach Anspruch 5,
**dadurch gekennzeichnet,**
**dass** ein Aufnahmebereich (98b) zumindest teilweise zwischen dem Bearbeitungsbereich (96b) und der Zusatzmasse (102b) angeordnet ist.

7. Oszillationshandwerkzeugmaschine mit einer Werkzeugaufnahme (18), welche dazu vorgesehen ist, ein Oszillationseinsatzwerkzeug (66, 68, 70, 72) eines Systems nach einem der Ansprüche 1 bis 6 aufzunehmen, **gekennzeichnet durch**
eine Vibrationsausgleichseinheit (20), welche dazu vorgesehen ist, ein Massenträgheitsmoment eines Oszillationseinsatzwerkzeugs (66, 68, 70, 72) eines Systems nach einem der Ansprüche 1 bis 6 zumindest teilweise zu kompensieren und **dadurch**, dass die Oszillationshandwerkzeugmaschine ein System nach einem der Ansprüche 1 bis 6 aufweist.

8. Bearbeitungseinheit mit einem System nach einem der Ansprüche 1 bis 6 und einer Oszillationshandwerkzeugmaschine nach Anspruch 7.

## Claims

1. System comprising at least one first oscillating insert tool (66) that can be operatively coupled to an oscillating hand power tool, and comprising at least one second oscillating insert tool (68, 70, 72) that differs from the first oscillating insert tool (66) and that, as an alternative to the first oscillating insert tool (66), can be operatively coupled to the oscillating hand power tool, characterzed in that at least one of the at least two oscillating insert tools (66, 68, 70, 72) has at least one compensating unit (88, 90, 92, 94), which is provided to adapt a mass moment of inertia of the first oscillating insert tool (66) to a mass moment of inertia of the at least one second oscillating insert tool (68, 70, 72), at least in such a way that a difference between the mass moment of inertia of the first oscilating inser tool (66) and the mass moment of inertia of the at least one second oscillating insert tool (68, 70, 72) about the oscillation axis in a provided operating state is less than 20% of the greatest mass moment of inertia of the at least two oscillating insert tools (66, 68, 70, 72).

2. System according to Claim 1,
**characterized in that**
at least one third oscillating insert tool (70, 72) is provided, which has the compensating unit (88, 90, 92, 94) and which, as an alternative to the first and the at least one second oscillating insert tool (66, 68, 70, 72), can be operatively coupled to the oscillating hand power tool.

3. System according to either one of the preceding claims,
**characterized in that**
the compensating unit (88, 90, 92, 94) is disposed, at least partially, radially outside of a receiving region (98a, 98b, 98c, 98d) of a basic body (40a, 40b, 40c, 40d) of the at least one oscillating insert tool (66, 68, 70, 72).

4. System according to any one of the preceding claims,
**characterized in that**
the compensating unit (88, 92) is constituted, at least partially, by at least one mass reduction (100a, 100c) disposed, at least partially, between a working region (96a, 96c) and a receiving region (98a, 98c) of a basic body (40a, 40c).

5. System according to any one of the preceding claims,
**characterized in that**
the compensating unit (90, 94) is constituted, at least partially, by at least one additional mass (102b, 102d).

6. System according to Claim 5,
**characterized in that**
a receiving region (98b) is disposed, at least partially, between the working region (96b) and the additional mass (102b).

7. Oscillating hand power tool comprising a tool receiver (18) that is provided to receive an oscillating insert tool (66, 68, 70, 72) of a system according to any one of Claims 1 to 6,
**characterized by**
a vibration compensating unit (20) provided to compensate, at least partially, a mass moment of inertia of an oscillating insert tool (66, 68, 70, 72) of a system according to any one of Claims 1 to 6, and in that the oscillating hand power tool has a system according to any one of Claims 1 to 6.

8. Working unit comprising a system according to any one of Claims 1 to 6, and comprising an oscillating hand power tool according to Claim 7.

## Revendications

1. Système comprenant au moins un premier outil à oscillation (66), qui peut être couplé activement à une machine-outil manuelle à oscillation, et au moins un deuxième outil à oscillation (68, 70, 72), différent du premier outil à oscillation (66), qui peut être couplé activement à la machine-outil manuelle à oscillation en alternance avec le premier outil à oscillation (66), **caractérisé en ce qu'**au moins un desdits au moins deux outils à oscillation (66, 68, 70, 72) présente au moins une unité d'équilibrage (88, 90, 92, 94), qui est prévue pour adapter un moment d'inertie du premier outil à oscillation (66) à un moment d'inertie dudit au moins un deuxième outil à oscillation (68, 70, 72) autour d'un axe d'oscillation, au moins de telle manière qu'une différence entre le moment d'inertie du premier outil à oscillation (66) et le moment d'inertie dudit au moins un deuxième outil à oscillation (68, 70, 72) autour de l'axe d'oscillation vaille, dans un état de fonctionnement prévu, moins de 20 % du plus grand moment d'inertie desdits au moins deux outils à oscillation (66, 68, 70, 72).

2. Système selon là revendication 1, **caractérisé en ce qu'**il est prévu au moins un troisième outil à oscillation (70, 72), qui présente l'unité d'équilibrage (88, 90, 92, 94) et qui peut être couplé activement à la machine-outil manuelle à oscillation alternativement au premier outil à oscillation (66) et audit au moins un deuxième outil à oscillation (68, 70, 72).

3. Système selon l'une quelconque des revendications précédentes, **caractérisé en ce que** l'unité d'équilibrage (88, 90, 92, 94) est disposée au moins en partie radialement à l'extérieur d'une zone de réception (98a, 98b, 98c, 98d) d'un corps de base (40a, 40b, 40c, 40d) dudit au moins un outil à oscillation (66, 68, 70, 72).

4. Système selon l'une quelconque des revendications précédentes, **caractérisé en ce que** l'unité d'équilibrage (88, 92) est formée au moins en partie par au moins une diminution de masse (100a, 100c), qui est disposée au moins en partie entre une zone d'usinage (96a, 96c) et une zone de réception (98a, 98c) d'un corps de base (40a, 40c).

5. Système selon l'une quelconque des revendications précédentes, **caractérisé en ce que** l'unité d'équilibrage (90, 94) est formée au moins en partie par au moins une masse additionnelle (102b, 102d).

6. Système selon la revendication 5, **caractérisé en ce qu'**une zone de réception (98b) est disposée au moins en partie entre la zone d'usinage (96b) et la masse additionnelle (102b).

7. Machine-outil manuelle à oscillation avec un logement d'outil (18), qui est prévu pour recevoir un outil à oscillation (66, 68, 70, 72) d'un système selon l'une quelconque des revendications 1 à 6, **caractérisée par** une unité d'équilibrage de vibrations (20), qui est prévue pour compenser au moins en partie un moment d'inertie d'un outil à oscillation (66, 68, 70, 72) d'un système selon l'une quelconque des revendications 1 à 6, et en ce que la machine-outil manuelle à oscillation présente un système selon l'une quelconque des revendications 1 à 6.

8. Unité d'usinage avec un système selon l'une quelconque des revendications 1 à 6 et une machine-outil manuelle à oscillation selon la revendication 7.
